(19) Europäisches Patentamt / European Patent Office / Office européen des brevets

(11) **EP 4 140 765 B1**

(12) **EUROPEAN PATENT SPECIFICATION**


(45) Date of publication and mention of the grant of the patent: **12.08.2026 Bulletin 2026/33**

(21) Application number: **21803707.5**

(22) Date of filing: **03.02.2021**

(51) International Patent Classification (IPC):
***B60C 1/00*** $^{(2006.01)}$ ***C08L 25/04*** $^{(2006.01)}$
***C08L 67/00*** $^{(2006.01)}$ ***C08L 69/00*** $^{(2006.01)}$
***C08K 3/04*** $^{(2006.01)}$

(52) Cooperative Patent Classification (CPC):
(C-Sets available)
**B60C 1/00;** C08L 25/04 (Cont.)

(86) International application number:
**PCT/JP2021/003905**

(87) International publication number:
**WO 2021/229869 (18.11.2021 Gazette 2021/46)**


(54) **THERMOPLASTIC ELASTOMER COMPOSITION FOR TIRE, AND TIRE**

THERMOPLASTISCHE ELASTOMERZUSAMMENSETZUNG FÜR REIFEN UND REIFEN

COMPOSITION D'ÉLASTOMÈRE THERMOPLASTIQUE POUR PNEU ET PNEU


(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.05.2020 JP 2020085329**

(43) Date of publication of application:
**01.03.2023 Bulletin 2023/09**



(73) Proprietor: **Sumitomo Rubber Industries, Ltd.**
**Kobe-shi, Hyogo 651-0072 (JP)**

(72) Inventor: **MORITA, Koki**
**Kobe-shi, Hyogo 651-0072 (JP)**

(74) Representative: **Manitz Finsterwald**
**Patent- und Rechtsanwaltspartnerschaft mbB**
**Ganghoferstraße 29**
**80339 München (DE)**



(56) References cited:

**EP-A1- 3 438 176**
**WO-A1-2013/042167**
**JP-A- 2007 056 246**
**JP-A- 2015 531 420**
**JP-A- 2019 001 344**
**JP-A- 2019 001 344**
**JP-A- 2019 001 359**
**JP-A- 2019 001 359**
**JP-A- H0 867 807**
**KR-A- 20100 076 194**
**US-A1- 2015 099 106**
**US-A1- 2020 115 515**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 67/025, C08L 25/06, C08K 3/04;**
**C08L 67/025, C08L 69/00, C08K 3/04;**
**C08L 69/00, C08L 67/025;**
**C08L 69/00, C08L 67/025, C08K 3/04**

## Description

TECHNICAL FIELD

The present invention relates to a thermoplastic elastomer composition for tires and a tire.

BACKGROUND ART

Studies have been made on tires which include thermoplastic elastomer-containing components in order to increase the recyclability of tires. However, thermoplastic elastomers present problems with durability and other properties because they do not have chemical bonds between the molecular chains as found in vulcanized rubber materials.
Further prior art thermoplastic elastomer compositions for tires are disclosed in the following documents JP 2019 001359 A, JP 2019 001344 A, EP 3 438176 A1 and US 2015/099106 A1.

SUMMARY OF INVENTION

TECHNICAL PROBLEM

The present invention aims to solve the above problem and provide a thermoplastic elastomer composition for tires and a tire which have excellent durability.

SOLUTION TO PROBLEM

The present invention relates to a thermoplastic elastomer composition for tires, containing polymer components including a polyester thermoplastic elastomer and at least one resin selected from the group consisting of polycarbonate resins and styrene resins,
the thermoplastic elastomer composition having a specific heat capacity of 1.5 J/(g·K) or less,
wherein the thermoplastic elastomer composition has a carbon black content of 1 to 100 parts by mass per 100 parts by mass of the polymer components,
wherein the specific heat capacity of the samples for evaluation, at a temperature of 25°C, is calculated from the differential scanning calorimetry (DSC) data measured in accordance with JIS K7123z2012 "Testing methods for specific heat capacity of plastics".
Preferably, the thermoplastic elastomer composition has a polyester thermoplastic elastomer content of 50 to 95% by mass and a combined content of polycarbonate resins and styrene resins of 5 to 50% by mass, each based on 100% by mass of the polymer components.
Preferably, the thermoplastic elastomer composition has a ratio ($\eta r/\eta e$) of a melt shear viscosity ($\eta r$) of the at least one resin selected from the group consisting of polycarbonate resins and styrene resins to a melt shear viscosity ($\eta e$) of the polyester thermoplastic elastomer of 0.8 to 1.4, wherein the melt shear viscosity of the samples for evaluation is measured using a capillary rheometer under the conditions below and in accordance with JIS K7199:
Measurement conditions:

- L/D = 10/1
- Temperature: any temperature depending on melting points of materials
- No Bagley correction.

Preferably, the polyester thermoplastic elastomer in the thermoplastic elastomer composition has a melting point of 180 to 220°C.
Preferably, in the thermoplastic elastomer composition, the polyester thermoplastic elastomer is a copolymer that includes a polymer containing a polyester forming a hard segment and a polymer forming a soft segment, the polyester forming a hard segment is at least one selected from the group consisting of polyethylene terephthalate, polybutylene terephthalate, polymethylene terephthalate, polyethylene naphthalate, and polybutylene naphthalate, and the polymer forming a soft segment is a polyether.
Preferably, in the thermoplastic elastomer composition, the polyester thermoplastic elastomer is a copolymer that includes a polymer containing a polyester forming a hard segment and a polymer forming a soft segment, the polyester forming a hard segment is polybutylene terephthalate, and the polymer forming a soft segment is an aliphatic polyether.
Preferably, in the thermoplastic elastomer composition, the polycarbonate resins are at least one selected from the group consisting of aromatic polycarbonates, aliphatic polycarbonates, and aromatic-aliphatic polycarbonates, and

the styrene resins are at least one selected from the group consisting of homopolymers polymerized from single styrenic monomers, copolymers copolymerized from two or more styrenic monomers, and copolymers of styrenic monomers and additional monomers copolymerizable therewith.

Preferably, in the thermoplastic elastomer composition, the polycarbonate resins are aromatic polycarbonates, and the styrene resins are homopolymers polymerized from single styrenic monomers.

Preferably, in the thermoplastic elastomer composition, the polycarbonate resins are bisphenol A aromatic polycarbonate resins, and the styrene resins are polystyrene.

Preferably, the thermoplastic elastomer composition has a filler content of 5 to 150 parts by mass per 100 parts by mass of the polymer components.

Preferably, the thermoplastic elastomer composition has a silica content of 25 to 150 parts by mass per 100 parts by mass of the polymer components.

The present invention also relates to a tire, including the thermoplastic elastomer composition.

ADVANTAGEOUS EFFECTS OF INVENTION

The thermoplastic elastomer composition for tires according to the present invention contains polymer components including a polyester thermoplastic elastomer and at least one resin selected from the group consisting of polycarbonate resins and styrene resins, and has a specific heat capacity of 1.5 J/(g·K) or less, wherein the thermoplastic elastomer composition has a carbon black content of 1 to 100 parts by mass per 100 parts by mass of the polymer components. Thus, the present invention provides a thermoplastic elastomer composition for tires and a tire which have excellent durability.

DESCRIPTION OF EMBODIMENTS

The present invention relates to a thermoplastic elastomer composition for tires which contains polymer components including a polyester thermoplastic elastomer and at least one resin component selected from the group consisting of polycarbonate resins and styrene resins, and has a specific heat capacity of 1.5 J/(g·K) or less, wherein the thermoplastic elastomer composition has a carbon black content of 1 to 100 parts by mass per 100 parts by mass of the polymer components. Such a thermoplastic elastomer composition has excellent durability.

The mechanism of this advantageous effect is not clear, but is believed to be as follows.

The polyester thermoplastic elastomer and the hard resin (polycarbonate resin and/or styrene resin) are well compatible with each other and thus are highly miscible, which enables a reduction in the size of the dispersed particles of the hard resin island phase, thereby improving durability. Moreover, since the specific heat capacity is as small as 1.5 J/(g·K) or less, lower energy will be required to raise the temperature upon injection or the like process. Thus, the temperature of the polymer components, e.g., in the extruder can be increased to improve the dispersibility of the polycarbonate resin and/or styrene resin and thereby reduce the size of the dispersed resin particles, so that the increase in the surface area of the hard resin and the increase in the number of particles thereof provide distribution of stress, thereby improving durability. Moreover, since the thermoplastic elastomer composition has a high rate of temperature increase, the melting time, e.g., in the injection molding machine can be shortened to reduce degradation by heat, thereby preventing a reduction in durability. It is believed that excellent durability can be imparted to the thermoplastic elastomer composition due to the above mechanism of action.

Thus, the present thermoplastic elastomer composition solves the problem (purpose) of imparting excellent durability by a formulation having a specific heat capacity of 1.5 J/(g·K) or less. In other words, the formulation with a specific heat capacity of 1.5 J/(g·K) or less does not define the problem (purpose), and the problem herein is to impart excellent durability. In order to solve this problem, the composition has been formulated to satisfy the above parameter.

The thermoplastic elastomer composition has a specific heat capacity of 1.5 J/(g·K) or less. In view of durability, the specific heat capacity is preferably 1.4 J/(g·K) or less, still more preferably 1.3 J/(g·K) or less. The lower limit is not limited, and a smaller specific heat capacity is more desirable.

Here, the specific heat capacity can be measured (at a temperature of 25°C) in accordance with JIS K7123:2012, specifically as described later in EXAMPLES.

The specific heat capacity of the thermoplastic elastomer composition may be reduced by one or a combination of the following methods, for example: selecting a material having a low specific heat capacity as the polyester thermoplastic elastomer or the hard resin (polycarbonate resin and/or styrene resin); and incorporating a filler such as carbon black.

[Polymer component]

(Elastomer component)

The thermoplastic elastomer composition contains a polyester thermoplastic elastomer.

In the thermoplastic elastomer composition, the amount of polyester thermoplastic elastomers based on 100% by mass of the polymer components is preferably 5% by mass or more, more preferably 30% by mass or more, still more preferably 45% by mass or more, particularly preferably 50% by mass or more, most preferably 60% by mass or more. The upper limit is preferably 98% by mass or less, more preferably 95% by mass or less, still more preferably 93% by mass or less. When the amount is within the range indicated above, good durability tends to be obtained. Particularly when the amount of polyester thermoplastic elastomers is 50% by mass or more, a sea-island structure can be formed in which the polyester thermoplastic elastomer forms a sea phase and the hard resin (polycarbonate resin and/or styrene resin) forms an island phase.

In the thermoplastic elastomer composition, the amount of polyester thermoplastic elastomers based on 100% by mass of the elastomer components is preferably 20% by mass or more, more preferably 40% by mass or more, still more preferably 50% by mass or more. The upper limit is not limited and may be 100% by mass. In view of the physical properties of the composition, the amount may be 95% by mass or less, 90% by mass or less, or 85% by mass or less. When the amount is within the range indicated above, good durability tends to be obtained.

The term "polyester thermoplastic elastomer" refers to an elastic polymeric compound and may be a thermoplastic resin material formed of a copolymer which includes a polymer containing a polyester forming a crystalline hard segment with a high melting point and a polymer forming a non-crystalline soft segment with a low glass transition temperature and whose structure includes a partial structure consisting of a polyester.

Examples of polyester thermoplastic elastomers include ester thermoplastic elastomers (TPC) as specified in JIS K6418:2007. Specific examples include materials in which at least a polyester forms a crystalline hard segment with a high melting point and another polymer (for example, a polyester or polyether) forms a non-crystalline soft segment with a low glass transition temperature.

The polyester forming a hard segment in the polyester thermoplastic elastomer may be an aromatic polyester. The aromatic polyester may be formed from, for example, an aromatic dicarboxylic acid or ester-forming derivative thereof and an aliphatic diol.

For example, the aromatic polyester may be a polybutylene terephthalate derived from both terephthalic acid and/or dimethyl terephthalate and 1,4-butanediol. Other examples of the aromatic polyester include polyesters derived from both a dicarboxylic acid component, such as isophthalic acid, phthalic acid, naphthalene-2,6-dicarboxylic acid, naphthalene-2,7-dicarboxylic acid, diphenyl-4,4'-dicarboxylic acid, diphenoxyethane dicarboxylic acid, 5-sulfoisophthalic acid, or an ester-forming derivative thereof, and a diol having a molecular weight of 300 or less, for example, an aliphatic diol such as ethylene glycol, trimethylene glycol, pentamethylene glycol, hexamethylene glycol, neopentyl glycol, or decamethylene glycol, an alicyclic diol such as 1,4-cyclohexane dimethanol or tricyclodecane dimethylol, or an aromatic diol such as xylylene glycol, bis(p-hydroxy)diphenyl, bis(p-hydroxyphenyl)propane, 2,2-bis[4-(2-hydroxyethoxy)phenyl] propane, bis[4-(2-hydroxy)phenyl]sulfone, 1,1-bis[4-(2-hydroxyethoxy)phenyl]cyclohexane, 4,4'-dihydroxy-p-terphenyl, or 4,4'-dihydroxy-p-quarterphenyl), as well as copolymer polyesters obtained by combining two or more of these dicarboxylic acid components or diol components. Moreover, a tri- or higher functional carboxylic acid component, oxyacid component, hydroxy component, or the like within the range of 5 mol% or less may be copolymerized.

Among these polyesters forming a hard segment, polyethylene terephthalate, polybutylene terephthalate, polymethylene terephthalate, polyethylene naphthalate, polybutylene naphthalate, etc. are preferred in view of durability, with polybutylene terephthalate being particularly preferred.

Examples of the polymer forming a soft segment in the polyester thermoplastic elastomer include aliphatic polyethers and aliphatic polyesters. Examples of aliphatic polyethers include poly(ethylene oxide) glycol, poly(propylene oxide) glycol, poly(tetramethylene oxide) glycol, poly(hexamethylene oxide) glycol, copolymers of ethylene oxide and propylene oxide, ethylene oxide adducts of poly(propylene oxide) glycol, and copolymers of ethylene oxide and tetrahydrofuran. Examples of aliphatic polyesters include poly(ε-caprolactone), polyenantholactone, polycaprylolactone, polybutylene adipate, and polyethylene adipate.

Among these polymers forming a soft segment, poly(tetramethylene oxide) glycol, ethylene oxide adducts of poly(propylene oxide) glycol, poly(e-caprolactone), polybutylene adipate, polyethylene adipate, etc. are preferred in view of durability.

In view of durability, the number average molecular weight of the polymer (polyester) forming a hard segment is preferably 300 to 6000. In view of durability, the number average molecular weight of the polymer forming a soft segment is preferably 300 to 6000.

The ratio by mass of the hard segment and the soft segment (mass of hard segment:mass of soft segment) in the polyester thermoplastic elastomer is preferably 99:1 to 20:80, more preferably 98:2 to 30:70.

In view of durability, the combination of the hard segment and the soft segment in the polyester thermoplastic elastomer is preferably a combination of polybutylene terephthalate as a hard segment and an aliphatic polyether as a soft

segment, particularly preferably a combination of polybutylene terephthalate as a hard segment and poly(ethylene oxide) glycol as a soft segment. The polyester thermoplastic elastomer may be a single compound or a combination of two or more compounds.

Here, the polyester thermoplastic elastomer may be synthesized by copolymerizing a polymer forming a hard segment with a polymer forming a soft segment by a known method.

Examples of usable commercial products of the polyester thermoplastic elastomer include "Keyflex" available from LG Chem Ltd., "PELPRENE" available from Toyobo Co., Ltd., "Hytrel" available from DU PONT-TORAY CO., LTD., and "Flexmer" available from The Nippon Synthetic Chemical Industry Co., Ltd.

The melt shear viscosity (measurement temperature: 200°C) of the polyester thermoplastic elastomer is preferably 500 kPa·s or more, more preferably 600 kPa·s or more, still more preferably 700 kPa·s or more, particularly preferably 800 kPa·s or more, most preferably 843 kPa·s or more. The upper limit is preferably 2000 kPa·s or less, more preferably 1500 kPa·s or less, still more preferably 1200 kPa·s or less, particularly preferably 1186 kPa·s or less, most preferably 1000 kPa·s or less. When the melt shear viscosity is within the range indicated above, good durability tends to be obtained.

The melting point of the polyester thermoplastic elastomer is preferably 100°C or higher, more preferably 150°C or higher, still more preferably 162°C or higher, particularly preferably 180°C or higher. The upper limit is preferably 300°C or lower, more preferably 250°C or lower, still more preferably 220°C or lower, particularly preferably 194°C or lower. When the melting point is within the range indicated above, good durability tends to be obtained.

The thermoplastic elastomer composition may contain additional thermoplastic elastomers other than polyester thermoplastic elastomers. Examples of the additional thermoplastic elastomers include olefin thermoplastic elastomers, styrene thermoplastic elastomers (e.g., elastomer styrene-isobutylene-styrene block copolymers (SIBS), styrene-isoprene-styrene block copolymers (SIS), styrene-isobutylene block copolymers (SIB), styrene-butadiene-styrene block copolymers (SBS), styrene-ethylene/butene-styrene block copolymers (SEBS), styrene-ethylene/propylene-styrene block copolymers (SEPS), styrene-ethylene/ethylene/propylene-styrene block copolymers (SEEPS), and styrene-butadiene/butylene-styrene block copolymers (SBBS)), vinyl chloride thermoplastic elastomers, urethane thermoplastic elastomers, polyamide thermoplastic elastomers, and fluorinated thermoplastic elastomers.

The thermoplastic elastomer composition may contain elastomer components other than the above-described thermoplastic elastomers. Examples of such additional elastomer components include diene rubbers. Examples of the diene rubbers include isoprene-based rubbers, polybutadiene rubbers (BR), styrene-butadiene rubbers (SBR), styrene-isoprene-butadiene rubbers (SIBR), ethylenepropylene-diene rubbers (EPDM), chloroprene rubbers (CR), and acrylonitrile-butadiene rubbers (NBR). Other examples include butyl-based rubbers and fluororubbers. These may be used alone or in combinations of two or more. SBR, BR, and isoprene-based rubbers are preferred among the additional elastomers because they are suitable in tire applications.

The diene rubbers may be either unmodified or modified diene rubbers.

The modified diene rubbers may be any diene rubber having a functional group interactive with a filler such as silica. Examples include a chain end-modified diene rubber obtained by modifying at least one chain end of a diene rubber with a compound (modifier) having the above functional group (i.e., a chain end-modified diene rubber terminated with the functional group); a backbone-modified diene rubber having the functional group in the backbone; a backbone- and chain end-modified diene rubber having the functional group in both the backbone and chain end (e.g., a backbone- and chain end-modified diene rubber in which the backbone has the functional group and at least one chain end is modified with the modifier); and a chain end-modified diene rubber into which a hydroxy or epoxy group has been introduced by modification (coupling) with a polyfunctional compound having two or more epoxy groups in the molecule.

Examples of the above functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxy, oxy, and epoxy groups. Here, these functional groups may be substituted. Preferred among these are amino groups (preferably amino groups whose hydrogen atom is replaced with a C1-C6 alkyl group), alkoxy groups (preferably C1-C6 alkoxy groups), and alkoxysilyl groups (preferably C1-C6 alkoxysilyl groups).

Any SBR may be used, and examples include emulsion-polymerized styrene-butadiene rubbers (E-SBR) and solution-polymerized styrene-butadiene rubbers (S-SBR). These may be used alone or in combinations of two or more.

The styrene content of the SBR is preferably 5% by mass or higher, more preferably 10% by mass or higher, still more preferably 15% by mass or higher. The styrene content is also preferably 60% by mass or lower, more preferably 40% by mass or lower, still more preferably 30% by mass or lower. When the styrene content is within the range indicated above, the advantageous effect can be more suitably achieved.

Herein, the styrene content of the SBR is determined by $^{1}$H-NMR analysis.

For example, SBR products manufactured or sold by Sumitomo Chemical Co., Ltd., JSR Corporation, Asahi Kasei Corporation, Zeon Corporation, etc. may be used as the SBR.

The SBR may be either unmodified or modified SBR. Examples of the modified SBR include those into which

functional groups as listed for the modified diene rubbers have been introduced.

When the thermoplastic elastomer composition contains SBR, the amount of SBR based on 100% by mass of the polymer components is preferably 5% by mass or more, more preferably 10% by mass or more, still more preferably 20% by mass or more. The upper limit is preferably 80% by mass or less, more preferably 60% by mass or less, still more preferably 50% by mass or less. When the amount is within the range indicated above, good durability tends to be obtained.

When the thermoplastic elastomer composition contains SBR, the amount of SBR based on 100% by mass of the elastomer components is preferably 5% by mass or more, more preferably 10% by mass or more, still more preferably 20% by mass or more. The upper limit is preferably 80% by mass or less, more preferably 60% by mass or less, still more preferably 50% by mass or less. When the amount is within the range indicated above, good durability tends to be obtained.

Any BR may be used, and examples include high-cis BR having a high cis content, BR containing syndiotactic polybutadiene crystals, and BR synthesized using rare earth catalysts (rare earth-catalyzed BR). These may be used alone or in combinations of two or more. To improve abrasion resistance, high-cis BR having a cis content of 90% by mass or higher is preferred among these.

Moreover, the BR may be either unmodified or modified BR. Examples of the modified BR include those into which functional groups as listed for the modified diene rubbers have been introduced.

When the thermoplastic elastomer composition contains BR, the amount of BR based on 100% by mass of the polymer components is preferably 5% by mass or more, more preferably 10% by mass or more, still more preferably 20% by mass or more. The upper limit is preferably 80% by mass or less, more preferably 60% by mass or less, still more preferably 50% by mass or less. When the amount is within the range indicated above, good durability tends to be obtained.

When the thermoplastic elastomer composition contains BR, the amount of BR based on 100% by mass of the elastomer components is preferably 5% by mass or more, more preferably 10% by mass or more, still more preferably 20% by mass or more. The upper limit is preferably 80% by mass or less, more preferably 60% by mass or less, still more preferably 50% by mass or less. When the amount is within the range indicated above, good durability tends to be obtained.

Usable commercial products of BR are available from Ube Industries, Ltd., JSR Corporation, Asahi Kasei Corporation, Zeon Corporation, etc.

Examples of isoprene-based rubbers include natural rubbers (NR), polyisoprene rubbers (IR), refined NR, modified NR, and modified IR. Examples of NR include those commonly used in the rubber industry such as SIR20, RSS#3, and TSR20. Any IR may be used, and examples include those commonly used in the rubber industry such as IR2200. Examples of refined NR include deproteinized natural rubbers (DPNR) and highly purified natural rubbers (UPNR). Examples of modified NR include epoxidized natural rubbers (ENR), hydrogenated natural rubbers (HNR), and grafted natural rubbers. Examples of modified IR include epoxidized polyisoprene rubbers, hydrogenated polyisoprene rubbers, and grafted polyisoprene rubbers. These may be used alone or in combinations of two or more.

When the thermoplastic elastomer composition contains isoprene-based rubbers, the amount of isoprene-based rubbers based on 100% by mass of the polymer components is preferably 5% by mass or more, more preferably 10% by mass or more, still more preferably 20% by mass or more. The upper limit is preferably 80% by mass or less, more preferably 60% by mass or less, still more preferably 50% by mass or less. When the amount is within the range indicated above, good durability tends to be obtained.

When the thermoplastic elastomer composition contains isoprene-based rubbers, the amount of isoprene-based rubbers based on 100% by mass of the elastomer components is preferably 5% by mass or more, more preferably 10% by mass or more, still more preferably 20% by mass or more. The upper limit is preferably 80% by mass or less, more preferably 60% by mass or less, still more preferably 50% by mass or less. When the amount is within the range indicated above, good durability tends to be obtained.

(Resin component)

The thermoplastic elastomer composition contains at least one resin selected from the group consisting of polycarbonate resins and styrene resins as a resin component.

In the thermoplastic elastomer composition, the combined amount of polycarbonate resins and styrene resins based on 100% by mass of the polymer components is preferably 2% by mass or more, more preferably 5% by mass or more, still more preferably 7% by mass or more. The upper limit is preferably 95% by mass or less, more preferably 70% by mass or less, still more preferably 55% by mass or less, particularly preferably 50% by mass or less, most preferably 40% by mass or less. When the combined amount is within the range indicated above, good durability tends to be obtained. In particular, when the combined amount is 50% by mass or less, a sea-island structure can be formed in which the polyester thermoplastic elastomer forms a sea phase and the hard resin (polycarbonate resin and/or styrene resin) forms an island phase.

In the thermoplastic elastomer composition, the combined amount of polycarbonate resins and styrene resins based on 100% by mass of the resin components is preferably 50% by mass or more, more preferably 70% by mass or more, still more preferably 90% by mass or more, particularly preferably 95% by mass or more. The upper limit is not limited

and may be 100% by mass.

The term "polycarbonate resin" refers to a polymer that can be produced by, for example, a phosgene method in which a polyhydroxy compound is reacted with phosgene, or a transesterification method in which a polyhydroxy compound is reacted with a carbonate ester. Herein, polycarbonate resins encompass polyester carbonate resins. The term "polyester carbonate resin" refers to a polymer having structural units linked not only by a carbonate bond but also by an ester bond.

The polycarbonate resins may be aromatic polycarbonates, aliphatic polycarbonates, or aromatic-aliphatic polycarbonates. Aromatic polycarbonates are preferred among these.

Examples of the aromatic polycarbonate resins include resins produced by, for example, an interfacial polymerization method (phosgene method) in which an aromatic dihydroxy compound or a mixture thereof with a small amount of a polyhydroxy compound is reacted with phosgene, or a melting method (transesterification method) in which the compound or mixture is reacted with a carbonate diester. With these methods, linear or branched thermoplastic (co) polymers can usually be produced. Here, those produced by the melting method may include those in which the amount of terminal hydroxy groups is controlled by reaction with an end-capping agent.

Examples of the aromatic dihydroxy compound include various types such as 2,2-bis(4-hydroxyphenyl)propane (= bisphenol A), tetramethyl bisphenol A, bis(4-hydroxyphenyl)-p-diisopropylbenzene, hydroquinone, resorcinol, and 4,4-dihydroxydiphenyl. In general, bisphenol A is often used. Also usable are aromatic dihydroxy compounds bonded to tetraalkylphosphonium sulfonates, and polymers or oligomers having a siloxane structure and containing a phenolic hydroxy group on both ends.

In the thermoplastic elastomer composition, the amount of polycarbonate resins based on 100% by mass of the polymer components is preferably 2% by mass or more, more preferably 5% by mass or more, still more preferably 7% by mass or more. The upper limit is preferably 95% by mass or less, more preferably 70% by mass or less, still more preferably 55% by mass or less, particularly preferably 50% by mass or less, most preferably 40% by mass or less. When the amount is within the range indicated above, good durability tends to be obtained.

In the thermoplastic elastomer composition, the amount of polycarbonate resins based on 100% by mass of the resin components is preferably 50% by mass or more, more preferably 70% by mass or more, still more preferably 90% by mass or more, particularly preferably 95% by mass or more. The upper limit is not limited and may be 100% by mass.

The melt shear viscosity (measurement temperature: 200°C) of the polycarbonate resins is preferably 20,000 kPa·s or more, more preferably 40,000 kPa·s or more, still more preferably 45,000 kPa·s or more, particularly preferably 50,000 kPa·s or more, most preferably 52,096 kPa·s or more. The upper limit is preferably 100,000 kPa·s or less, more preferably 80,000 kPa·s or less, still more preferably 60,000 kPa·s or less. When the melt shear viscosity is within the range indicated above, good durability tends to be obtained.

The melting point of the polycarbonate resins is preferably 100°C or higher, more preferably 120°C or higher, still more preferably 130°C or higher, particularly preferably 150°C or higher, most preferably 154°C or higher. The upper limit is preferably 300°C or lower, more preferably 270°C or lower, still more preferably 250°C or lower. When the melting point is within the range indicated above, good durability tends to be obtained.

The term "styrene resin" refers to a polymer produced from a styrenic monomer as a structural monomer, and examples include polymers polymerized from styrenic monomers as main components (at least 50% by mass). Specific examples include homopolymers polymerized from single styrenic monomers (e.g., styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, p-chlorostyrene), copolymers copolymerized from two or more styrenic monomers, and copolymers of styrenic monomers and additional monomers copolymerizable therewith.

Examples of the additional monomers include acrylonitriles such as acrylonitrile and methacrylonitrile; unsaturated carboxylic acids such as acrylic and methacrylic acid; unsaturated carboxylic acid esters such as methyl acrylate and methyl methacrylate; dienes such as chloroprene, butadiene, and isoprene; olefins such as 1-butene and 1-pentene; and α,β-unsaturated carboxylic acids and acid anhydrides thereof such as maleic anhydride.

In view of durability, polystyrene is preferred among the above-mentioned styrene resins.

In the thermoplastic elastomer composition, the amount of styrene resins based on 100% by mass of the polymer components is preferably 2% by mass or more, more preferably 5% by mass or more, still more preferably 7% by mass or more. The upper limit is preferably 95% by mass or less, more preferably 70% by mass or less, still more preferably 55% by mass or less, particularly preferably 50% by mass or less, most preferably 40% by mass or less. When the amount is within the range indicated above, good durability tends to be obtained.

In the thermoplastic elastomer composition, the amount of styrene resins based on 100% by mass of the resin components is preferably 50% by mass or more, more preferably 70% by mass or more, still more preferably 90% by mass or more, particularly preferably 95% by mass or more. The upper limit is not limited and may be 100% by mass.

The melt shear viscosity (measurement temperature: 200°C) of the styrene resins is preferably 200 kPa·s or more, more preferably 500 kPa·s or more, still more preferably 600 kPa·s or more. The upper limit is preferably 5000 kPa·s or less, more preferably 3000 kPa·s or less, still more preferably 2000 kPa·s or less, particularly preferably 1500 kPa·s or

less, most preferably 1030 kPa·s or less. When the melt shear viscosity is within the range indicated above, good durability tends to be obtained.

In the thermoplastic elastomer composition, the ratio (ηr/ηe) of the melt shear viscosity (ηr, measurement temperature: 200°C) of the at least one resin selected from the group consisting of polycarbonate resins and styrene resins to the melt shear viscosity (ηe, measurement temperature: 200°C) of the polyester thermoplastic elastomer is preferably 0.5 or higher, more preferably 0.7 or higher, still more preferably 0.8 or higher, particularly preferably 0.9 or higher, most preferably 1.2 or higher. The upper limit is preferably 50.0 or lower, more preferably 43.9 or lower, still more preferably 3.0 or lower, particularly preferably 2.0 or lower, most preferably 1.4 or lower. When the ratio is within the range indicated above, specifically, when the ratio is closer to 1.0, the size of the dispersed particles of the hard resin island phase can be the smallest, so that good durability tends to be obtained. Here, the melt shear viscosity (ηr) of the resin refers to the shear viscosity of the total resin component(s) including at least one polycarbonate resin and/or styrene resin.

Herein, the melt shear viscosity is obtained by measuring the steady flow shear viscosity using a rheometer, specifically as described later in EXAMPLES.

The melting point of the styrene resins is preferably 80°C or higher, more preferably 90°C or higher, still more preferably 100°C or higher. The upper limit is preferably 250°C or lower, more preferably 220°C or lower, still more preferably 200°C or lower. When the melting point is within the range indicated above, good durability tends to be obtained.

In the thermoplastic elastomer composition, the ratio (Tr/Te) of the melting point (Tr) of the at least one resin selected from the group consisting of polycarbonate resins and styrene resins to the melting point (Te) of the polyester thermoplastic elastomer is preferably 0.5 or higher, more preferably 0.7 or higher, still more preferably 0.8 or higher, particularly preferably 0.9 or higher. The upper limit is preferably 5.0 or lower, more preferably 3.0 or lower, still more preferably 2.0 or lower, particularly preferably 1.7 or lower. When the ratio is within the range indicated above, the polyester thermoplastic elastomer and the polycarbonate resin and/or styrene resin tend to be well mixed. Moreover, when the ratio is closer to 1.0, the size of the dispersed particles of the hard resin island phase can be the smallest, so that good durability tends to be obtained. Here, the melting point (Tr) of the resin refers to the melting point of the total resin component(s) including at least one polycarbonate resin and/or styrene resin.

Herein, the melting point may be defined as, for example, the peak melting temperature measured using a DSC measurement apparatus.

The thermoplastic elastomer composition may contain additional resins other than polycarbonate resins and styrene resins which are solid at room temperature (25°C). Examples of such additional resins include coumarone-indene resins, terpene resins, p-t-butylphenol acetylene resins, and acrylic resins.

The coumarone-indene resins include resins that contain coumarone and indene as the monomer components forming the skeleton (backbone) of the resins. Examples of monomer components which may be contained in the skeleton in addition to coumarone and indene include styrene, α-methylstyrene, methylindene, and vinyltoluene.

Examples of the terpene resins include polyterpene, terpene phenol, and aromatic modified terpene resins.

The term "polyterpene resins" refers to resins produced by polymerizing terpene compounds, or hydrogenated products of the resins. The term "terpene compounds" refers to hydrocarbons having a composition represented by $(C_5H_8)_n$ or oxygen-containing derivatives thereof, each of which has a terpene backbone and is classified as, for example, a monoterpene ($C_{10}H_{16}$), sesquiterpene ($C_{15}H_{24}$), or diterpene ($C_{20}H_{32}$). Examples of the terpene compounds include α-pinene, β-pinene, dipentene, limonene, myrcene, alloocimene, ocimene, α-phellandrene, α-terpinene, γ-terpinene, terpinolene, 1,8-cineole, 1,4-cineole, α-terpineol, β-terpineol, and γ-terpineol.

Other examples of the polyterpene resins include terpene resins made from the above-mentioned terpene compounds, such as α-pinene resins, β-pinene resins, limonene resins, dipentene resins, and β-pinene-limonene resins, and hydrogenated terpene resins produced by hydrogenation of these terpene resins. Examples of the terpene phenol resins include resins copolymerized from the above-mentioned terpene compounds and phenolic compounds, and resins produced by hydrogenation of these resins. Specific examples include resins produced by condensation of the terpene compounds, phenolic compounds, and formaldehyde. Here, examples of the phenolic compounds include phenol, bisphenol A, cresol, and xylenol. Examples of the aromatic modified terpene resins include resins obtained by modifying terpene resins with aromatic compounds, and resins produced by hydrogenation of these resins. Here, the aromatic compounds may be any compound having an aromatic ring, examples of which include phenol compounds such as phenol, alkylphenols, alkoxyphenols, and unsaturated hydrocarbon group-containing phenols; naphthol compounds such as naphthol, alkylnaphthols, alkoxynaphthols, and unsaturated hydrocarbon group-containing naphthols; styrene and styrene derivatives such as alkylstyrenes, alkoxystyrenes, and unsaturated hydrocarbon group-containing styrenes; coumarone, and indene.

Examples of the p-t-butylphenol acetylene resins include resins produced by condensation of p-t-butylphenol and acetylene.

Suitable examples of the acrylic resins include, but are not limited to, solvent-free acrylic resins because they contain few impurities and provide a sharp molecular weight distribution.

Examples of the solvent-free acrylic resins include (meth)acrylic resins (polymers) synthesized by high

temperature continuous polymerization (high temperature continuous bulk polymerization as described in, for example, US Patent No. 4,414,370, JP S59-6207 A, JP H5-58005 B, JP H1-313522 A, US Patent No. 5,010,166, and annual research report TREND 2000 issued by Toagosei Co., Ltd., vol. 3, pp. 42-45) using no or minimal amounts of auxiliary raw materials such as polymerization initiators, chain transfer agents, and organic solvents. Herein, the term "(meth)acrylic" means methacrylic and acrylic.

Preferably, the acrylic resins are substantially free of auxiliary raw materials such as polymerization initiators, chain transfer agents, and organic solvents. Moreover, the acrylic resins are preferably those which are produced by continuous polymerization and have a relatively narrow compositional distribution or molecular weight distribution.

As described above, the acrylic resins are preferably those which are substantially free of auxiliary raw materials such as polymerization initiators, chain transfer agents, and organic solvents, i.e., which have a high purity. The purity of the acrylic resins (the resin content of the resins) is preferably 95% by mass or higher, more preferably 97% by mass or higher.

Examples of the monomer components of the acrylic resins include (meth)acrylic acids and (meth)acrylic acid derivatives such as (meth)acrylic acid esters (e.g., alkyl esters, aryl esters, and aralkyl esters), (meth)acrylamides, and (meth)acrylamide derivatives.

In addition to the (meth)acrylic acids or (meth)acrylic acid derivatives, aromatic vinyls, such as styrene, $\alpha$-methylstyrene, vinyltoluene, vinylnaphthalene, divinylbenzene, trivinylbenzene, or divinylnaphthalene, may also be used as the monomer components of the acrylic resins.

The acrylic resins may be formed only of (meth)acrylic components or may further contain constituent components other than the (meth)acrylic components.

Moreover, the acrylic resins may contain a hydroxy group, a carboxyl group, a silanol group, or the like.

Usable commercial products of the resin components such as polycarbonate resins and styrene resins are available from, for example, Mitsubishi Engineering-Plastics Corporation, PS Japan Corporation, Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., Arakawa Chemical Industries, Ltd., Taoka Chemical Co., Ltd., etc.

[Filler]

The thermoplastic elastomer composition may contain a filler. Any filler may be used, including materials known in the elastomer field such as silica, carbon black, calcium carbonate, talc, alumina, clay, aluminum hydroxide, aluminum oxide, and mica. Carbon black or silica is preferred among these.

In the thermoplastic elastomer composition, the amount of fillers (the total amount of fillers) per 100 parts by mass of the polymer components is preferably 5 parts by mass or more, more preferably 8 parts by mass or more, still more preferably 10 parts by mass or more, particularly preferably 20 parts by mass or more. Moreover, the upper limit is preferably 150 parts by mass or less, more preferably 120 parts by mass or less, still more preferably 100 parts by mass or less. When the amount is within the range indicated above, good durability tends to be obtained.

Any carbon black may be used, and examples include N134, N110, N220, N234, N219, N339, N330, N326, N351, N550, and N762. Usable commercial products are available from Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon, etc. These may be used alone or in combinations of two or more.

The amount of carbon black per 100 parts by mass of the polymer components is preferably 1 part by mass or more, more preferably 3 parts by mass or more, still more preferably 5 parts by mass or more, particularly preferably 20 parts by mass or more. The amount is also preferably 100 parts by mass or less, more preferably 80 parts by mass or less, still more preferably 50 parts by mass or less. When the amount is within the range indicated above, good durability tends to be obtained. According to the present invention, the thermoplastic elastomer composition has a carbon black content of 1 to 100 parts by mass per 100 parts by mass of the polymer components.

The nitrogen adsorption specific surface area ($N_2SA$) of the carbon black is preferably 10 $m^2/g$ or more, more preferably 30 $m^2/g$ or more, still more preferably 40 $m^2/g$ or more. The $N_2SA$ is also preferably 200 $m^2/g$ or less, more preferably 150 $m^2/g$ or less, still more preferably 130 $m^2/g$ or less. When the $N_2SA$ is not more than the upper limit, the carbon black tends to provide good dispersion.

Here, the nitrogen adsorption specific surface area of the carbon black can be determined in accordance with JIS K6217-2:2001.

Examples of the silica include dry silica (anhydrous silica) and wet silica (hydrous silica). Wet silica is preferred among these because it contains a large number of silanol groups. Usable commercial products are available from Degussa, Rhodia, Tosoh Silica Corporation, Solvay Japan, Tokuyama Corporation, etc. These may be used alone or in combinations of two or more.

The amount of silica per 100 parts by mass of the polymer components is preferably 25 parts by mass or more,

more preferably 30 parts by mass or more, still more preferably 50 parts by mass or more. The upper limit of the amount is not limited, but is preferably 150 parts by mass or less, more preferably 130 parts by mass or less, still more preferably 120 parts by mass or less. When the amount is within the range indicated above, good durability tends to be obtained.

The nitrogen adsorption specific surface area ($N_2SA$) of the silica is preferably 50 $m^2/g$ or more, more preferably 80 $m^2/g$ or more, still more preferably 100 $m^2/g$ or more. Moreover, the upper limit of the $N_2SA$ of the silica is not limited, but it is preferably 350 $m^2/g$ or less, more preferably 300 $m^2/g$ or less, still more preferably 250 $m^2/g$ or less. When the $N_2SA$ is within the range indicated above, good durability tends to be obtained.

Here, the $N_2SA$ of the silica is measured by a BET method in accordance with ASTM D3037-93.

The thermoplastic elastomer composition which contains silica preferably further contains a silane coupling agent.

Any silane coupling agent may be used, and examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 2-triethoxysilylethyl-N,N-dimethylthiocarbamoyltetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Usable commercial products are available from Degussa, Momentive, Shin-Etsu Silicone, Tokyo Chemical Industry Co., Ltd., AZmax. Co., Dow Corning Toray Co., Ltd., etc. These may be used alone or in combinations of two or more.

The amount of silane coupling agents per 100 parts by mass of the silica is preferably 3 parts by mass or more, more preferably 6 parts by mass or more. The amount is also preferably 20 parts by mass or less, more preferably 15 parts by mass or less. When the amount is within the range indicated above, good durability tends to be obtained.

[Liquid plasticizer]

The thermoplastic elastomer composition may contain liquid plasticizers which are liquid at 25°C and have plasticizing properties, such as oils and liquid resins. These may be used alone or in combinations of two or more.

The amount of liquid plasticizers, if present, per 100 parts by mass of the polymer components is preferably 1 part by mass or more, more preferably 3 parts by mass or more, still more preferably 5 parts by mass or more. The amount is also preferably 50 parts by mass or less, more preferably 30 parts by mass or less, still more preferably 20 parts by mass or less. When the amount is within the range indicated above, good durability tends to be obtained.

The oils may include, but are not limited to, conventional oils, including, for example: process oils such as paraffinic process oils, aromatic process oils, and naphthenic process oils; low polycyclic aromatic (PCA) process oils such as TDAE and MES; vegetable oils; and mixtures thereof. From the standpoints of abrasion resistance and tensile properties, aromatic process oils are preferred among these. Specific examples of the aromatic process oils include Diana Process Oil AH series available from Idemitsu Kosan Co., Ltd.

Examples of the liquid resins include, but are not limited to, liquid aromatic vinyl polymers, coumarone-indene resins, indene resins, terpene resins, rosin resins, and hydrogenated products thereof.

The term "liquid aromatic vinyl polymers" refers to resins produced by polymerizing α-methylstyrene and/or styrene. Examples include liquid resins such as styrene homopolymers, α-methylstyrene homopolymers, and copolymers of α-methylstyrene and styrene.

The term "liquid coumarone-indene resins" refers to resins that contain coumarone and indene as the main monomer components forming the skeleton (backbone) of the resins. Examples of monomer components which may be contained in the skeleton in addition to coumarone and indene include styrene, α-methylstyrene, methylindene, and vinyltoluene.

The term "liquid indene resins" refers to liquid resins that contain indene as the main monomer component forming the skeleton (backbone) of the resins.

The term "liquid terpene resins" refers to liquid terpene-based resins typified by resins produced by polymerizing terpene compounds such as α-pinene, β-pinene, camphene, or dipentene, and terpene phenol resins produced from terpene compounds and phenolic compounds.

The term "liquid rosin resins" refers to liquid rosin-based resins typified by natural rosins, polymerized rosins, modified rosins, and ester compounds thereof or hydrogenated products thereof.

[Other components]

From the standpoint of properties such as crack resistance and ozone resistance, the thermoplastic elastomer composition preferably contains an antioxidant.

Any antioxidant may be used, and examples include naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as polymerized 2,2,4-trimethyl-1,2-dihydroquinoline; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. Preferred among these are p-phenylenediamine antioxidants and quinoline antioxidants, with N-(1,3-dimethylbutyl)-N'-phenyl-p-phenylenediamine or polymerized 2,2,4-trimethyl-1,2-dihydroquinoline being more preferred. Usable commercial products are available from, for example, Seiko Chemical Co., Ltd., Sumitomo Chemical Co., Ltd., Ouchi Shinko Chemical Industrial Co., Ltd., Flexsys, etc.

The amount of antioxidants per 100 parts by mass of the polymer components is preferably 0.2 parts by mass or more, more preferably 0.5 parts by mass or more. When the amount is not less than the lower limit, sufficient ozone resistance tends to be obtained. The amount is preferably 7.0 parts by mass or less, more preferably 4.0 parts by mass or less. When the amount is not more than the upper limit, a good appearance tends to be obtained.

The thermoplastic elastomer composition may contain stearic acid. The amount of stearic acid per 100 parts by mass of the polymer components is preferably at least 0.5 to 10 parts by mass, more preferably 0.5 to 5 parts by mass.

Here, the stearic acid may be a conventional one. Examples include products available from NOF Corporation, Kao Corporation, FUJIFILM Wako Pure Chemical Corporation, Chiba Fatty Acid Co., Ltd., etc.

The thermoplastic elastomer composition preferably contains zinc oxide. The amount of zinc oxide per 100 parts by mass of the polymer components is preferably 0.5 to 10 parts by mass, more preferably 1 to 5 parts by mass.

Here, the zinc oxide may be a conventional one. Examples include products available from Mitsui Mining & Smelting Co., Ltd., Toho Zinc Co., Ltd., HakusuiTech Co., Ltd., Seido Chemical Industry Co., Ltd., Sakai Chemical Industry Co., Ltd., etc.

The thermoplastic elastomer composition may contain a wax. Any wax may be used, and examples include petroleum waxes and natural waxes, as well as synthetic waxes produced by purifying or chemically treating a plurality of waxes. These waxes may be used alone or in combinations of two or more.

Examples of the petroleum waxes include paraffin waxes and microcrystalline waxes. The natural waxes may be any wax derived from non-petroleum resources, and examples include plant waxes such as candelilla wax, carnauba wax, Japan wax, rice wax, and jojoba wax; animal waxes such as beeswax, lanolin, and spermaceti; mineral waxes such as ozokerite, ceresin, and petrolatum; and purified products of these waxes. Usable commercial products are available from Ouchi Shinko Chemical Industrial Co., Ltd., Nippon Seiro Co., Ltd., Seiko Chemical Co., Ltd., etc. Here, the amount of waxes may be appropriately selected in view of ozone resistance and cost.

The thermoplastic elastomer composition may contain sulfur in order to moderately crosslink the polymer chains, thereby providing a good balance between the above-mentioned properties.

The amount of sulfur per 100 parts by mass of the polymer components is preferably 0.1 parts by mass or more, more preferably 0.5 parts by mass or more, still more preferably 0.7 parts by mass or more. The amount is preferably 6.0 parts by mass or less, more preferably 4.0 parts by mass or less, still more preferably 3.0 parts by mass or less.

Examples of the sulfur include those commonly used in the rubber industry, such as powdered sulfur, precipitated sulfur, colloidal sulfur, insoluble sulfur, highly dispersible sulfur, and soluble sulfur. Usable commercial products are available from Tsurumi Chemical Industry Co., Ltd., Karuizawa Sulfur Co., Ltd., Shikoku Chemicals Corporation, Flexsys, Nippon Kanryu Industry Co., Ltd., Hosoi Chemical Industry Co., Ltd., etc. These may be used alone or in combinations of two or more.

The thermoplastic elastomer composition may contain a vulcanization accelerator.

Although the amount of vulcanization accelerators is not limited and may be arbitrarily selected according to the desired cure rate or crosslink density, the amount per 100 parts by mass of the polymer components is usually 0.3 to 10 parts by mass, preferably 0.5 to 7 parts by mass.

Any type of vulcanization accelerator may be used including usual ones. Examples of vulcanization accelerators include thiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These may be used alone or in combinations of two or more. From the standpoint of the balance between

the above-mentioned properties, sulfenamide vulcanization accelerators or guanidine vulcanization accelerators are preferred among these.

The thermoplastic elastomer composition may contain any appropriate additive usually used in the application field, such as release agents and pigments, in addition to the above-mentioned components.

The thermoplastic elastomer composition may be prepared by known methods. For example, it may be prepared from components such as a polyester thermoplastic elastomer, a polycarbonate resin, and a styrene resin by known forming techniques such as injection molding. Alternatively, for example, it may be prepared by kneading the components in a rubber kneading machine such as an open roll mill or Banbury mixer, optionally followed by cross-linking. The kneading conditions may include a kneading temperature of usually 50 to 200°C, preferably 80 to 190°C, and a kneading time of usually 30 seconds to 30 minutes, preferably 1 to 30 minutes.

The thermoplastic elastomer composition is for use in a tire, examples of which include pneumatic tires and airless tires. Pneumatic tires are preferred among these. For example, the tire may be suitably used as a summer tire or a winter tire (e.g., a studless winter tire, a snow tire, a studded tire). The tire may be used as a tire for passenger vehicles, a tire for large passenger vehicles, a tire for large SUVs, a tire for heavy duty vehicles such as trucks and buses, a tire for light trucks, a tire for motorcycles, a racing tire (high performance tire), etc.

The tire can be produced from the thermoplastic elastomer composition by usual methods. For example, it may be produced from components such as a polyester thermoplastic elastomer, a polycarbonate resin, and a styrene resin by known forming techniques such as injection molding. Alternatively, the tire may be produced by extruding the unvulcanized thermoplastic elastomer composition containing the components into the shape of a tire component, forming it with other tire components in a usual manner on a tire building machine to build an unvulcanized tire, and then heating and pressing the unvulcanized tire in a vulcanizer.

EXAMPLES

The present invention will be specifically described with reference to, but not limited to, examples.

The chemicals used are described below.

TPEE 1 (polyester thermoplastic elastomer): Hytrel SB754 available from DU PONT-TORAY CO., LTD. (block copolymer of polybutylene terephthalate and polyether, melt shear viscosity: 1186 kPa·s (measurement temperature: 200°C), melting point: 162°C)
TPEE 2 (polyester thermoplastic elastomer): Hytrel 4767N available from DU PONT-TORAY CO., LTD. (block copolymer of polybutylene terephthalate and polyether, melt shear viscosity: 843 kPa·s (measurement temperature: 200°C), melting point: 194°C)
Resin 1: HF77 available from PS Japan Corporation (polystyrene resin, melt shear viscosity: 1030 kPa·s (measurement temperature: 200°C), melting point: 100°C)
Resin 2: Iupilon S-2000PS available from Mitsubishi Engineering-Plastics Corporation (bisphenol A aromatic polycarbonate resin, melt shear viscosity: 52096 kPa·s (measurement temperature: 200°C), melting point: 154°C)
Carbon black: DIABLACK N550 available from Mitsubishi Chemical Corporation ($N_2SA$: 42 $m^2/g$)

(Preparation of samples for evaluation)

The materials according to each formulation recipe shown in Table 1 were injection-molded into the shape of a tire side portion having an outer diameter of 260 mm, an inner diameter of 125 mm, and a thickness of 4 mm using a twin screw extruder to prepare samples for evaluation.

The melt shear viscosity of the resins and thermoplastic elastomers used, and the specific heat capacity and durability of the samples for evaluations were measured and evaluated as described below.

<Measurement of melt shear viscosity>

The melt shear viscosity of the samples for evaluation was measured using a capillary rheometer under the conditions below (in accordance with JIS K7199).

(Measurement conditions)

- L/D = 10/1
- Temperature: any temperature depending on melting points of materials

- No Bagley correction

<Measurement of specific heat capacity>

The specific heat capacity of the samples for evaluation (at a temperature of 25°C) was calculated from the differential scanning calorimetry (DSC) data measured in accordance with JIS K7123:2012 "Testing methods for specific heat capacity of plastics".

<Durability>

The samples for evaluation were repeatedly subjected to 20% compressive deformation at 50 Hz in the radial direction at room temperature. The time until a damage occurred was expressed as an index. A higher index indicates better durability.

[Table 1]

Table 1 demonstrates reference example 1, inventive examples 2 to 5 and comparative examples 1 to 4.

| | | Example 1 | Example 2 | Example 3 | Example 4 | Example 5 | Comparative Example 1 | Comparative Example 2 | Comparative Example 3 | Comparative Example 4 |
|---|---|---|---|---|---|---|---|---|---|---|
| Formulation (parts by mass) | TPEE 1 | 45 | 45 | 60 | 60 | | 100 | 60 | | |
| | TPEE 2 | | | | | 60 | | | | 60 |
| | Resin 1 | | | | 40 | 40 | | | 100 | 40 |
| | Resin 2 | 55 | 55 | 40 | | | | 40 | | |
| | Carbon black | | 20 | 20 | 20 | 20 | | | | |
| Physical properties | Melt shear viscosity ratio (Melt shear viscosity of resin/Melt shear viscosity of polyester thermoplastic elastomer) | 43.9 | 43.9 | 43.9 | 0.9 | 1.2 | | 43.9 | | 1.2 |
| | Melt shear viscosity (kPa·s) of resin | 52096 | 52096 | 52096 | 1030 | 1030 | | 52096 | 1030 | 1030 |
| | Melt shear viscosity (kPa·s) of polyester thermoplastic elastomer | 1186 | 1186 | 1186 | 1186 | 843 | 1186 | 1186 | | 843 |
| | Melting point (°C) of polyester thermoplastic elastomer | 162 | 162 | 162 | 162 | 194 | 162 | 162 | | 194 |
| | Melting point (°C) of resin | 154 | 154 | 154 | 100 | 100 | | 154 | 100 | 154 |
| | Specific heat capacity (J/g·K) at 25°C | 1.7 | 1.3 | 1.4 | 1.4 | 1.4 | 2.2 | 1.8 | 1.2 | 1.8 |
| Evaluation results | Durability | 105 | 110 | 115 | 125 | 120 | 100 | 90 | 80 | 95 |

As shown in Table 1, excellent durability was exhibited by the compositions of the examples which contained polymer components including a polyester thermoplastic elastomer and at least one resin selected from the group consisting of polycarbonate resins and styrene resins, and had a specific heat capacity of 1.5 J/(g·K) or less.

## Claims

1. A thermoplastic elastomer composition for tires, comprising polymer components including a polyester thermoplastic elastomer and at least one resin selected from the group consisting of polycarbonate resins and styrene resins,

   the thermoplastic elastomer composition having a specific heat capacity of 1.5 J/(g·K) or less,
   wherein the thermoplastic elastomer composition has a carbon black content of 1 to 100 parts by mass per 100 parts by mass of the polymer components,
   wherein the specific heat capacity of the samples for evaluation, at a temperature of 25°C, is calculated from the differential scanning calorimetry (DSC) data measured in accordance with JIS K7123:2012 "Testing methods for specific heat capacity of plastics".

2. The thermoplastic elastomer composition for tires according to claim 1,
   wherein the thermoplastic elastomer composition has a polyester thermoplastic elastomer content of 50 to 95% by mass and a combined content of polycarbonate resins and styrene resins of 5 to 50% by mass, each based on 100% by mass of the polymer components.

3. The thermoplastic elastomer composition for tires according to claim 1 or 2,

   wherein the thermoplastic elastomer composition has a ratio (ηr/ηe) of a melt shear viscosity (ηr) of the at least one resin selected from the group consisting of polycarbonate resins and styrene resins to a melt shear viscosity (ηe) of the polyester thermoplastic elastomer of 0.8 to 1.4,
   wherein the melt shear viscosity of the samples for evaluation is measured using a capillary rheometer under the conditions below and in accordance with JIS K7199:
   Measurement conditions:

   - L/D = 10/1
   - Temperature: any temperature depending on melting points of materials
   - No Bagley correction.

4. The thermoplastic elastomer composition for tires according to any one of claims 1 to 3,
   wherein the polyester thermoplastic elastomer has a melting point of 180 to 220°C.

5. The thermoplastic elastomer composition for tires according to any one of claims 1 to 4,

   wherein the polyester thermoplastic elastomer is a copolymer that comprises a polymer containing a polyester forming a hard segment and a polymer forming a soft segment,
   the polyester forming a hard segment is at least one selected from the group consisting of polyethylene terephthalate, polybutylene terephthalate, polymethylene terephthalate, polyethylene naphthalate, and polybutylene naphthalate, and
   the polymer forming a soft segment is a polyether.

6. The thermoplastic elastomer composition for tires according to any one of claims 1 to 4,

   wherein the polyester thermoplastic elastomer is a copolymer that comprises a polymer containing a polyester forming a hard segment and a polymer forming a soft segment,
   the polyester forming a hard segment is polybutylene terephthalate, and
   the polymer forming a soft segment is an aliphatic polyether.

7. The thermoplastic elastomer composition for tires according to any one of claims 1 to 6,

   wherein the polycarbonate resins are at least one selected from the group consisting of aromatic polycarbonates, aliphatic polycarbonates, and aromatic-aliphatic polycarbonates, and
   the styrene resins are at least one selected from the group consisting of homopolymers polymerized from single styrenic monomers, copolymers copolymerized from two or more styrenic monomers, and copolymers of styrenic monomers and additional monomers copolymerizable therewith.

8. The thermoplastic elastomer composition for tires according to any one of claims 1 to 6,

wherein the polycarbonate resins are aromatic polycarbonates, and
the styrene resins are homopolymers polymerized from single styrenic monomers.

**9.** The thermoplastic elastomer composition for tires according to any one of claims 1 to 6,

wherein the polycarbonate resins are bisphenol A aromatic polycarbonate resins, and
the styrene resins are polystyrene.

**10.** The thermoplastic elastomer composition for tires according to any one of claims 1 to 9,
wherein the thermoplastic elastomer composition has a filler content of 5 to 150 parts by mass per 100 parts by mass of the polymer components.

**11.** The thermoplastic elastomer composition for tires according to any one of claims 1 to 10,
wherein the thermoplastic elastomer composition has a silica content of 25 to 150 parts by mass per 100 parts by mass of the polymer components.

**12.** A tire, comprising the thermoplastic elastomer composition according to any one of claims 1 to 11.

## Patentansprüche

**1.** Thermoplastische Elastomerzusammensetzung für Reifen, umfassend Polymerkomponenten, die ein thermoplastisches Polyester-Elastomer und mindestens ein Harz, ausgewählt aus der Gruppe bestehend aus Polycarbonat-Harzen und Styrol-Harzen, umfassen,

wobei die thermoplastische Elastomerzusammensetzung eine spezifische Wärmekapazität von 1,5 J/(g·K) oder weniger aufweist,
wobei die thermoplastische Elastomerzusammensetzung einen Rußgehalt von 1 bis 100 Massenteilen pro 100 Massenteile der Polymerkomponenten aufweist,
wobei die spezifische Wärmekapazität der zu bewertenden Proben bei einer Temperatur von 25 °C aus den gemäß JIS K7123:2012 "Prüfverfahren für die spezifische Wärmekapazität von Kunststoffen" gemessenen Daten der dynamischen Differenzkalorimetrie (DSC) berechnet ist.

**2.** Thermoplastische Elastomerzusammensetzung für Reifen nach Anspruch 1,
wobei die thermoplastische Elastomerzusammensetzung einen Gehalt an thermoplastischem Polyester-Elastomer von 50 bis 95 Massen-% und einen Gesamtgehalt an Polycarbonat-Harzen und Styrol-Harzen von 5 bis 50 Massen-% aufweist, jeweils bezogen auf 100 Massen-% der Polymerkomponenten.

**3.** Thermoplastische Elastomerzusammensetzung für Reifen nach Anspruch 1 oder 2,

wobei die thermoplastische Elastomerzusammensetzung ein Verhältnis ($\eta r/\eta e$) der Schmelzscherviskosität ($\eta r$) des mindestens einen Harzes, ausgewählt aus der Gruppe bestehend aus Polycarbonat-Harzen und Styrol-Harzen, zur Schmelzscherviskosität ($\eta e$) des thermoplastischen Polyester-Elastomers von 0,8 bis 1,4 aufweist,
wobei die Schmelzscherviskosität der zu bewertenden Proben unter den nachstehenden Bedingungen und gemäß JIS K7199 mit einem Kapillarrheometer gemessen wird:
Messbedingungen:

- L/D = 10/1
- Temperatur: beliebige Temperatur, abhängig von Schmelzpunkten der Materialien
- Keine Bagley-Korrektur.

**4.** Thermoplastische Elastomerzusammensetzung für Reifen nach einem der Ansprüche 1 bis 3,
wobei das thermoplastische Polyester-Elastomer einen Schmelzpunkt von 180 bis 220 °C aufweist.

**5.** Thermoplastische Elastomerzusammensetzung für Reifen nach einem der Ansprüche 1 bis 4,

wobei das thermoplastische Polyester-Elastomer ein Copolymer ist, das ein Polymer, welches einen Polyester enthält, der ein hartes Segment bildet, und ein Polymer, welches ein weiches Segment bildet, umfasst,

wobei der Polyester, der ein hartes Segment bildet, mindestens einer ist, welcher ausgewählt ist aus der Gruppe bestehend aus Polyethylenterephthalat, Polybutylenterephthalat, Polymethylenterephthalat, Polyethylennaphthalat und Polybutylennaphthalat, und
das Polymer, welches ein weiches Segment bildet, ein Polyether ist.

**6.** Thermoplastische Elastomerzusammensetzung für Reifen nach einem der Ansprüche 1 bis 4,

wobei das thermoplastische Polyester-Elastomer ein Copolymer ist, das ein Polymer, welches einen Polyester enthält, der ein hartes Segment bildet, und ein Polymer, welches ein weiches Segment bildet, umfasst,
der Polyester, der das harte Segment bildet, Polybutylenterephthalat ist, und
das Polymer, welches das weiche Segment bildet, ein aliphatischer Polyether ist.

**7.** Thermoplastische Elastomerzusammensetzung für Reifen nach einem der Ansprüche 1 bis 6,

wobei die Polycarbonat-Harze mindestens eines sind, das aus der Gruppe bestehend aus aromatischen Polycarbonaten, aliphatischen Polycarbonaten und aromatisch-aliphatischen Polycarbonaten ausgewählt ist, und
die Styrol-Harze mindestens eines sind, das aus der Gruppe ausgewählt bestehend aus Homopolymeren, die aus einzelnen Styrol-Monomeren polymerisiert sind, Copolymeren, die aus zwei oder mehr Styrol-Monomeren copolymerisiert sind, und Copolymeren aus Styrol-Monomeren und zusätzlichen, damit copolymerisierbaren Monomeren ausgewählt ist.

**8.** Thermoplastische Elastomerzusammensetzung für Reifen nach einem der Ansprüche 1 bis 6,

wobei die Polycarbonat-Harze aromatische Polycarbonate sind, und
die Styrol-Harze Homopolymere sind, die aus einzelnen Styrol-Monomeren polymerisiert sind.

**9.** Thermoplastische Elastomerzusammensetzung für Reifen nach einem der Ansprüche 1 bis 6,

wobei die Polycarbonat-Harze aromatische Bisphenol-A Polycarbonat-Harze sind, und
die Styrol-Harze Polystyrol sind.

**10.** Thermoplastische Elastomerzusammensetzung für Reifen nach einem der Ansprüche 1 bis 9,
wobei die thermoplastische Elastomerzusammensetzung einen Füllstoffgehalt von 5 bis 150 Massenteilen pro 100 Massenteile der Polymerkomponenten aufweist.

**11.** Thermoplastische Elastomerzusammensetzung für Reifen nach einem der Ansprüche 1 bis 10,
wobei die thermoplastische Elastomerzusammensetzung einen Siliciumdioxidgehalt von 25 bis 150 Massenteilen pro 100 Massenteile der Polymerkomponenten aufweist.

**12.** Reifen, der die thermoplastische Elastomerzusammensetzung nach einem der Ansprüche 1 bis 11 umfasst.

## Revendications

**1.** Composition d’élastomère thermoplastique pour pneumatiques, comprenant des composants polymères incluant un élastomère thermoplastique polyester et au moins une résine choisie parmi le groupe constitué par les résines de polycarbonate et les résines de styrène,

la composition d’élastomère thermoplastique présentant une capacité thermique spécifique de 1,5 J/(g·K) ou moins,
la composition d’élastomère thermoplastique présentant une teneur en noir de carbone de 1 à 100 parties en masse pour 100 parties en masse des composants polymères,
la capacité thermique spécifique des échantillons destinés à l’évaluation, à une température de 25 °C, étant calculée à partir des données de calorimétrie différentielle à balayage (DSC) mesurées conformément à JIS K7123:2012 « Méthodes d’essai pour la capacité thermique spécifique des plastiques ».

**2.** Composition d’élastomère thermoplastique pour pneumatiques selon la revendication 1,

dans laquelle la composition d'élastomère thermoplastique présente une teneur en élastomère thermoplastique polyester de 50 à 95 % en masse et une teneur combinée en résines de polycarbonate et en résines de styrène de 5 à 50 % en masse, chacune par rapport à 100 % en masse des composants polymères.

**3.** Composition d'élastomère thermoplastique pour pneumatiques selon la revendication 1 ou 2,

dans laquelle la composition d'élastomère thermoplastique présente un rapport (ηr/ηe) d'une viscosité de cisaillement à l'état fondu (ηr) de l'au moins une résine choisie dans le groupe constitué par les résines de polycarbonate et les résines de styrène sur une viscosité de cisaillement à l'état fondu (ηe) de l'élastomère thermoplastique polyester de 0,8 à 1,4,
la viscosité de cisaillement à l'état fondu des échantillons destinés à l'évaluation est mesurée en utilisant un rhéomètre capillaire dans les conditions ci-dessous et conformément à JIS K7199 :
Conditions de mesure :

- L/D = 10/1
- Température : une température quelconque en fonction de points de fusion des matériaux
- Pas de correction de Bagley.

**4.** Composition d'élastomère thermoplastique pour pneumatiques selon l'une quelconque des revendications 1 à 3, dans laquelle l'élastomère thermoplastique polyester présente un point de fusion de 180 à 220 °C.

**5.** Composition d'élastomère thermoplastique pour pneumatiques selon l'une quelconque des revendications 1 à 4,

dans laquelle l'élastomère thermoplastique polyester est un copolymère qui comprend un polymère contenant un polyester formant un segment dur et un polymère formant un segment souple,
le polyester formant un segment dur est au moins un choisi parmi le groupe constitué par le poly(téréphtalate d'éthylène), le poly(téréphtalate de butylène), le poly(téréphtalate de méthylène), le poly(naphtalate d'éthylène) et le poly(naphtalate de butylène), et
le polymère formant un segment souple est un polyéther.

**6.** Composition d'élastomère thermoplastique pour pneumatiques selon l'une quelconque des revendications 1 à 4,

dans laquelle l'élastomère thermoplastique polyester est un copolymère qui comprend un polymère contenant un polyester formant un segment dur et un polymère formant un segment souple,
le polyester formant un segment dur est du poly(téréphtalate de butylène), et
le polymère formant un segment souple est un polyéther aliphatique.

**7.** Composition d'élastomère thermoplastique pour pneumatiques selon l'une quelconque des revendications 1 à 6,

dans laquelle les résines de polycarbonate sont au moins une choisie parmi le groupe constitué par les polycarbonates aromatiques, les polycarbonates aliphatiques et les polycarbonates aromatiques-aliphatiques, et
les résines de styrène sont au moins une choisie parmi le groupe constitué par les homopolymères polymérisés à partir des monomères styréniques seuls, des copolymères copolymérisés à partir de deux monomères styréniques ou plus, et des copolymères de monomères styréniques et de monomères supplémentaires copolymérisables avec ceux-ci.

**8.** Composition d'élastomère thermoplastique pour pneumatiques selon l'une quelconque des revendications 1 à 6,

dans laquelle les résines de polycarbonate sont des polycarbonates aromatiques, et
les résines de styrène sont des homopolymères polymérisés à partir des monomères styréniques seuls.

**9.** Composition d'élastomère thermoplastique pour pneumatiques selon l'une quelconque des revendications 1 à 6,

dans laquelle les résines de polycarbonate sont des résines de polycarbonate aromatiques à base de bisphénol A, et
les résines de styrène sont du polystyrène.

10. Composition d'élastomère thermoplastique pour pneumatiques selon l'une quelconque des revendications 1 à 9, dans laquelle la composition d'élastomère thermoplastique présente une teneur en charge de 5 à 150 parties en masse pour 100 parties en masse des composants polymères.

11. Composition d'élastomère thermoplastique pour pneumatiques selon l'une quelconque des revendications 1 à 10, dans laquelle la composition d'élastomère thermoplastique présente une teneur en silice de 25 à 150 parties en masse pour 100 parties en masse des composants polymères.

12. Pneumatique comprenant la composition d'élastomère thermoplastique selon l'une quelconque des revendications 1 à 11.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019001359 A
- JP 2019001344 A
- EP 3438176 A1
- US 2015099106 A1
- US 4414370 A
- JP S596207 A
- JP H558005 B
- JP H1313522 A
- US 5010166 A